# EUROPÄISCHE PATENTSCHRIFT

(11) **EP 2 509 789 B1**
(45) Veröffentlichungstag und Bekanntmachung des Hinweises auf die Patenterteilung: **15.04.2015**
(21) Anmeldenummer: 10800883.0
(22) Anmeldetag: 13.12.2010
(51) Int. Cl.: B32B 27/32, B32B 27/34, B32B 11/04, E04D 5/10

(54) **MEHRSCHICHTFOLIE MIT HOHER DURCHSTOSS- UND WEITERREISSFESTIGKEIT**
MULTILAYER FILM WITH HIGH PUNCTURE- AND TEAR PROPAGATION RESISTANCE
FILM MULTICOUCHE AVEC HAUTE RÉSISTANCE À LA PERFORATION ET À LA PROPAGATION DE LA DÉCHIRURE

(30) Priorität: 11.12.2009 DE 102009057862
(43) Veröffentlichungstag der Anmeldung: 17.10.2012
(73) Patentinhaber: Infiana Germany GmbH & Co. KG, 91301 Forchheim (DE)
(72) Erfinder: ENGELHARD, Heinz, 90427 Nürnberg (DE)
(74) Vertreter: Kutzenberger, Helga
(86) Internationale Anmeldenummer: PCT/EP2010/007571
(87) Internationale Veröffentlichungsnummer: WO 2011/069680

(56) Entgegenhaltungen:
- EP-A1- 1 407 878
- WO-A2-2008/022324
- US-A- 5 824 401
- US-B1- 6 217 962

## Beschreibung

Die vorliegende Erfindung betrifft eine Mehrschichtfolie umfassend eine Schicht (a) und eine Schicht (c), jeweils basierend auf wenigstens einem Propylen-Copolymer in einer Menge von wenigstens 30 Gew.-% und wenigstens einem Propylen-Homopolymer in einer Menge von wenigstens 20 Gew.-%, ggf. einem weiteren Polyolefin, vorzugsweise Polyethylen und ggf. bis zu 30 Gew.-% Additive, jeweils bezogen auf das Gesamtgewicht der Schicht (a) bzw. (c), wobei sich diese Komponenten jeweils immer auf 100 Gew.-% addieren, wenigstens eine innenliegende Schicht (b) basierend auf wenigstens einem Homo- und/oder Copolyamid mit Isophorondiamin-Einheiten als Polyamid-Komponente, jeweils eine zwischen den Schichten (a) und (b) bzw. (b) und (c) angeordnete Haftvermittlerschicht (d) bzw. (e), jeweils basierend auf wenigstens einem modifizierten thermoplastischen Olefin-Homo-oder Copolymeren, eine eine solche Mehrschichtfolie umfassende Abdichtungsbahn sowie deren Verwendung zur Dachabdeckung.

Aus dem Stand der Technik ist eine Vielzahl von Mehrschichtfolien bekannt, welche sich für eine Vielzahl von technischer Anwendungen eignen.

Für einige dieser technischen Anwendungen ist es jedoch erforderlich, dass sich die dafür eingesetzten Mehrschichtfolien durch eine Kombination ganz bestimmter mechanischer Eigenschaften sowie durch spezifische Barriere-Eigenschaften auszeichnen. Dies gilt besonders für Mehrschichtfolien, die zur Herstellung von Abdichtungsbahnen, insbesondere Bitumen-Abdichtungsbahnen, verwendet werden. Solche Bitumen-Abdichtungsbahnen werden beispielsweise als Dachabdeckung eingesetzt.

Im Stand der Technik sind derartige Abdichtungsbahnen umfassend Mehrschichtfolien bereits bekannt.

Nachteilig bei diesen unter Einsatz von Mehrschichtfolien hergestellten Abdichtungsbahnen ist jedoch, dass diese oftmals keine ausreichende Barrierewirkung gegenüber Ölen, insbesondere Mineralölen aufweisen. Solche Öle sind insbesondere Bestandteile von Bitumen-Massen. Eine Migration dieser Öle aus der Bitumen-Masse in die Mehrschichtfolie bewirkt nicht nur eine Austrocknung der bituminösen Masse, sondern auch eine Haftungsverringerung der Mehrschichtfolie auf der Bitumenbahn, so dass sich diese mit der Zeit von der Bitumen-Masse ablöst.

Ferner weisen die aus dem Stand der Technik bekannten, zur Herstellung von Abdichtungsbahnen verwendeten Mehrschichtfolien oftmals ungeeignete mechanische Eigenschaften wie eine nicht ausreichende Reißkraft, schlechte Weiterreißeigenschaften und einer zu geringen Durchstoßfestigkeit auf. Gerade Mehrschichtfolien für Abdichtungsbahnen wie z.B. für Dachabdeckungen müssen hohe mechanische Anforderungen erfüllen, da diese durch Begehung, Lagerung und Bewegung von Baumaterial sowie Witterungseinflüssen hohen mechanischen Belastungen ausgesetzt sind.

Es besteht daher ein Bedarf an Mehrschichtfolien, die sich sowohl durch sehr gute Barriere-Eigenschaften gegen Ölen als auch durch eine sehr gute mechanische Stabilität auszeichnen.

Aufgabe der vorliegenden Erfindung war es daher, Mehrschichtfolien zur Verfügung zu stellen, die sich durch eine sehr gute Barrierewirkung gegen Ölen und durch verbesserte mechanische Eigenschaften wie eine verbesserte Weiterreißfestigkeit, Durchstoßfestigkeit und eine gute Reißkraft gegenüber bekannten Mehrschichtfolien auszeichnen.

Diese Aufgabe wird durch die Bereitstellung einer Mehrschichtfolie umfassend wenigstens
(a) eine Schicht, vorzugsweise als eine Oberflächenschicht, basierend auf wenigstens einem Propylen-Copolymer in einer Menge von wenigstens 30 Gew.-%, bezogen auf das Gesamtgewicht der Schicht (a), wenigstens einem Propylen-Homopolymer in einer Menge von wenigstens 20 Gew.-%, ggf. einem weiteren Polyolefin, vorzugsweise einem Polyethylen, und ggf. bis zu 30 Gew.-% Additive, bezogen auf das Gesamtgewicht der Schicht (a), wobei sich die Komponenten immer auf 100 Gew.-% addieren,
(b) wenigstens eine innenliegende, vorzugsweise zentrale, Schicht basierend auf wenigstens einem Homo- und/oder Copolyamid mit Isophorondiamin-Einheiten als Polyamid-Komponente,
(c) eine Schicht, vorzugsweise als eine zweite Oberflächenschicht, basierend auf wenigstens einem Propylen-Copolymer in einer Menge von wenigstens 30 Gew.-%, bezogen auf das Gesamtgewicht der Schicht (c), wenigstens einem Propylen-Homopolymer in einer Menge von wenigstens 20 Gew.-%, bezogen auf das Gesamtgewicht der Schicht (c), ggf. einem weiteren Polyolefin, vorzugsweise einem Polyethylen, und ggf. bis zu 30 Gew.-% Additive, bezogen auf das Gesamtgewicht der Schicht (c), wobei sich die Komponenten immer auf 100 Gew.-% addieren, und
(d) bzw. (e) jeweils eine zwischen der Schicht (a) und der Schicht (b) bzw. der Schicht (b) und der Schicht (c) angeordnete Haftvermittlerschicht (d) bzw. (e) jeweils basierend auf wenigstens einem modifizierten thermoplastischen Olefin-Homo-oder Copolymeren,
gelöst.

Vorzugsweise sind die Schichten (a) bzw. (c) Oberflächenschichten der erfindungsgemäßen Mehrschichtfolie.

Die Schicht (a), gleich oder verschieden von der Schicht (c) der erfindungsgemäßen Mehrschichtfolie, enthält wenigstens ein Propylen-Copolymer in einer Menge von wenigstens 30 Gew.-%, vorzugsweise von wenigstens 35 Gew.-%, besonders bevorzugt von wenigstens 40 Gew.-%, jeweils bezogen auf das Gesamtgewicht der Schicht (a) bzw. (c).

Als Propylen-Copolymer der Schicht (a) bzw. (c) der erfindungsgemäßen Mehrschichtfolie eignet sich vorzugsweise wenigstens einem Copolymer aus Propylen und einem α,β-ungesättigten Olefin mit vorzugsweise 2 bzw. 4-6 Kohlenstoffatomen. Besonders bevorzugt umfasst die Schicht (a) bzw. (c) wenigstens ein Propylen-Copolymer ausgewählt aus der Gruppe umfassend Propylen-Ethylen-Copolymere, Propylen-Butylen-Copolymere, Propylen-Isobutylen-Copolymere und Mischungen aus wenigstens zwei der genannten Copolymeren. Ganz besonders bevorzugt liegt in der Schicht (a) bzw. (c) wenigstens ein Propylen-Ethylen-Copolymer vor.

Besonders bevorzugt enthält die Schicht (a) bzw. (c) wenigstens ein Propylen-Ethylen-Copolymer, welches höchstens 10 Gew.-%, vorzugsweise 1 bis 10 Gew.-%, besonders bevorzugt 5-10 Gew.-%, ganz besonders bevorzugt 7-9 Gew.-% an Ethylen-Einheiten, bezogen auf das Gesamtgewicht des Propylen-EthylenCopolymeren, aufweist.

Die Schicht (a) bzw. (c) der erfindungsgemäßen Mehrschichtfolie enthält jeweils wenigstens ein Propylen-Homopolymer in einer Menge von wenigstens 20 Gew.-%, vorzugsweise von wenigstens 25 Gew.-%, bezogen auf das Gesamtgewicht der Schicht (a) bzw. (c).

Die Schicht (c) ist vorzugsweise die zweite Oberflächenschicht der erfindungsgemäßen Mehrschichtfolie.

Die Schicht (a) bzw. die Schicht (c) der erfindungsgemäßen Mehrschichtfolie weist jeweils unabhängig voneinander vorzugsweise eine Schichtdicke von 5 µm bis 100 µm, besonders bevorzugt von 10 µm bis 90 µm, ganz besonders bevorzugt von 20 µm bis 80 µm, insbesondere von 25 µm bis 70 µm, insbesondere bevorzugt von 30 µm bis 50 µm auf.

In einer bevorzugten Ausführungsform der erfindungsgemäßen Mehrschichtfolie weisen die Schicht (a) und die Schicht (c) einen identischen Schichtaufbau, vorzugsweise eine identische Schichtdicke und identische Polymer-Komponenten, auf.

Die Schicht (b) der erfindungsgemäßen Mehrschichtfolie ist eine innenliegende, vorzugsweise in Bezug auf den Aufbau der Mehrschichtfolie zentrale Schicht basierend auf wenigstens einem Homo- und/oder Copolyamid mit Isophorondiamin-Einheiten.

Vorzugsweise dient die Schicht (b) der erfindungsgemäßen Mehrschichtfolie als eine Barriereschicht, besonders bevorzugt als eine Gasbarriereschicht, vorzugsweise als eine Sauerstoffbarriereschicht, eine Wasserdampfbarrierschicht und/oder eine Ölbarriereschicht, ganz besonders bevorzugt als eine Ölbarriereschicht.

Zur Herstellung der Schicht (b) geeignete Homo- und/oder Copolyamide mit Isophorondiamin-Einheiten als Diamin-Einheiten sind vorzugsweise wenigstens ein Homo- oder Copolyamid ausgewählt aus der Gruppe umfassend thermoplastische, aliphatische, teilaromatische und aromatische Homo- oder Copolyamide mit Isophorondiamin-Einheiten. Diese Copolyamide mit Isophorondiamin-Einheiten können aus weiteren aliphatischen und/oder cycloaliphatischen Diaminen mit 2-10 Kohlenstoffatomen wie Hexamethylendiamin und/oder aromatischen Diaminen mit 6-10 Kohlenstoffatomen wie p-Phenylendiamin, und aus aliphatischen und/oder aromatischen Dicarbonsäuren mit 6-14 Kohlenstoffatomen wie z.B. Adipinsäure, Terephthalsäure oder Isophthalsäure aufgebaut sein. Weiterhin können die Copolyamide mit Isophorondiamin-Einheiten auch aus Lactamen mit 4-10 Kohlenstoffatomen wie z.B. aus ε-Caprolactam hergestellt werden. In jedem Fall wird zur Herstellung dieser Homo- und/oder Copolyamide jedoch Isophorondiamin als wenigstens eine Diamin-Komponente eingesetzt, so dass die zur Herstellung der Schicht (b) geeigneten Homo- und/oder Copolyamide Isophorondiamin-Einheiten aufweisen. Erfindungsgemäß zum Einsatz kommende Polyamide mit Isophorondiamin-Einheiten sind vorzugsweise aus ε-Caprolactam, Isophorondiamin und einer aromatischen Dicarbonsäure, vorzugsweise Isophthalsäure, gebildete CoPolyamide.

Vorzugsweise basiert die Schicht (b) auf wenigstens einem Homo- und/oder Copolyamid mit Isophorondiamin-Einheiten, besonders bevorzugt auf wenigstens einem Copolyamid mit Isophorondiamin-Einheiten, in einer Menge von wenigstens 30 Gew.-%, besonders bevorzugt von wenigstens 35 Gew.-%, ganz besonders bevorzugt von wenigstens 40 Gew.-%, bezogen auf das Gesamtgewicht der Schicht (b).

Vorzugsweise beträgt der Anteil an Isophorondiamin-Einheiten in der vorstehend genannten Polyamid-Komponente der Schicht (b) wenigstens 1 Gew.-%, besonders bevorzugt wenigstens 2 Gew.-%, ganz besonders bevorzugt wenigstens 3 Gew.-%, insbesondere wenigstens 4 Gew.-%, insbesondere bevorzugt wenigstens 5 Gew.-%, bezogen auf das Gesamtgewicht dieser Polyamid-Komponente.

In einer anderen bevorzugten Ausführungsform beträgt der Anteil an Isophorondiamin-Einheiten in der vorstehend genannten Polyamid-Komponente der Schicht (b) vorzugsweise wenigstens 1 bis 10 Gew.-%, besonders bevorzugt 1,2 bis 9 Gew.-%, ganz besonders bevorzugt 1,5 bis 8 Gew.-%, insbesondere 1,8 bis 7 Gew.-%, insbesondere bevorzugt 2 bis 6 Gew.-%, bezogen auf das Gesamtgewicht der Polyamid-Komponente.

In einer bevorzugten Ausführungsform umfasst die Isophorondiamin-Einheiten aufweisende Polyamid-Komponente der Schicht (b) aliphatische oder aromatische Dicarbonsäure-Einheiten, vorzugsweise aromatische Dicarbonsäure-Einheiten, besonders bevorzugt aromatische Dicarbonsäure-Einheiten ausgewählt aus der Gruppe umfassend Terephthalsäure-Einheiten und Isophthalsäure-Einheiten.

Vorzugsweise enthält die Schicht (b) als weitere Polyamid-Komponente wenigstens ein keine Isophorondiamin-Einheiten aufweisendes, vorzugsweise aliphatisches Homo- und/oder Copolyamid, vorzugsweise in einer Menge von wenigstens 40 Gew.-%, besonders bevorzugt von wenigstens 45 Gew.-%, ganz besonders bevorzugt von wenigstens 50 Gew.-%, insbesondere von wenigstens 60 Gew.-%, bezogen auf das Gesamtgewicht der Schicht (b), wobei sich die Polyamid-Komponenten immer auf 100 Gew.-% addieren.

Zur Herstellung der Schicht (b) als weitere Polyamid-Komponente geeignete Homo- und/oder Copolyamide, welche keine Isophorondiamin-Einheiten aufweisen, sind vorzugsweise ausgewählt aus der Gruppe umfassend thermoplastische aliphatische, teilaromatische und aromatische Homo- oder Copolyamide. Diese Homo- oder Copolymamide, welche keine Isophorondiamin-Einheiten aufweisen, können aus aliphatischen und/oder cycloaliphatischen Diaminen mit 2-10 Kohlenstoffatomen wie Hexamethylendiamin und/oder aromatischen Diaminen mit 6-10 Kohlenstoffatomen wie p-Phenylendiamin, und aus aliphatischen und/oder aromatischen Dicarbonsäuren mit 6-14 Kohlenstoffatomen wie z.B. Adipinsäure, Terephthalsäure oder Isophthalsäure aufgebaut sein. Weiterhin können diese Homo- oder Copolyamide aus Lactamen mit 4-10 Kohlenstoffatomen wie z.B. aus ε-Caprolactam hergestellt werden. Erfindungsgemäß zum Einsatz kommende Homo- und/oder Copolyamide, welche keine Isophorondiamin-Einheiten aufweisen, sind vorzugsweise ausgewählt aus der Gruppe umfassend PA 6, PA 12, PA 66, PA 6I, PA 6T, entsprechende Copolymere und Mischungen aus wenigstens zwei der genannten Polyamide.

Die Schicht (b) der erfindungsgemäßen Mehrschichtfolie weist vorzugsweise eine Schichtdicke von 5 µm bis 100 µm, besonders bevorzugt von 7,5 µm bis 75 µm, ganz besonders bevorzugt von 10 µm bis 50 µm, insbesondere von 15 µm bis 30 µm auf.

Die Haftvermittlerschichten (d) und (e) der erfindungsgemäßen Mehrschichtfolie basieren jeweils auf wenigstens einem modifizierten thermoplastischen Olefin-Homo-oder Copolymeren.

Zur Herstellung der Haftvermittlerschichten (d) und (e) eignen sich vorzugsweise modifizierte thermoplastische Olefin-Homo- oder Copolymere von α,β-ungesättigten Olefinen mit 2-10 Kohlenstoffatomen wie z.B. Polyethylen (PE, insbesondere LDPE oder HDPE), Polypropylen (PP), Polybutylen (PB), Polyisobutylen (PI) oder Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Ein bevorzugtens thermoplastisches modifiziertes Olefin-Homo- oder Copolymer zur Herstellung der Haftvermittlerschichten (d) und (e) ist modifiziertes Propylen-Homopolymer. Vorzugsweise sind die thermoplastischen Olefin-Homo- oder Copolymere mit polaren Gruppen, vorzugsweise mit organischen Säure-Gruppen (Carboxyl-Gruppen) und/oder organischen Säureanhydrid-Gruppen, besonders bevorzugt Maleinsäureanhydrid-Gruppen modifiziert.

Vorzugsweise basieren die Haftvermittlerschichten (d) und (e) jeweils auf wenigstens einem modifizierten Propylen-Homopolymer, vorzugsweise in einer Menge von jeweils wenigstens 45 Gew.-%, besonders bevorzugt von wenigstens 55 Gew.-%, ganz besonders bevorzugt von wenigstens 65 Gew.-%, ganz besonders bevorzugt von wenigstens 70 Gew.-%, jeweils bezogen auf das Gesamtgewicht der Haftvermittlerschichten (d) bzw. (e).

In einer bevorzugten Ausführungsform der erfindungsgemäßen Mehrschichtfolie enthalten die Haftvermittlerschichten (d) und/oder (e) als weitere Polyolefin-Komponente jeweils unabhängig voneinander wenigstens ein nicht modifiziertes Olefin-Homo- oder Copolymer, vorzugsweise jeweils unabhängig voneinander wenigstens ein nicht modifiziertes Olefin-Homopolymer, besonders bevorzugt jeweils ein nicht modifiziertes Propylen-Homopolymer, vorzugsweise jeweils in einem Anteil von bis zu 30 Gew.-%, jeweils bezogen auf das Gesamtgewicht der Haftvermittlerschichten (d) bzw. (e), wobei sich die Polyolefin-Komponenten immer auf 100 Gew.-% addieren.

In einer bevorzugten Ausführungsform enthalten die Haftvermittlerschichten (d) und/oder (e) als weitere Polyolefin-Komponente jeweils unabhängig voneinander wenigstens ein nicht modifiziertes Olefin-Homo- oder Copolymer in einer Menge von 5 bis 30 Gew.-%, vorzugsweise von 15 bis 30 Gew.-%., wobei sich die Polyolefin-Komponenten immer auf 100 Gew.-% addieren.

In einer weiteren bevorzugten Ausführungsform der erfindungsgemäßen Mehrschichtfolie enthalten die Haftvermittlerschichten (d) und/oder (e) als weitere Polymer-Komponente jeweils unabhängig voneinander wenigstens ein Copolymer aus einem Olefin und wenigstens einem weiteren α,β-ungesättigten Monomeren mit wenigstens einer Ester-Gruppe, besonders bevorzugt jeweils unabhängig voneinander wenigstens ein Copolymer aus Ethylen oder Propylen und wenigstens einer Verbindung ausgewählt aus der Gruppe umfassend Vinylacetat und Alkyl(meth)acrylat, vorzugsweise Methyl(meth)acrylat, Ethyl(meth)acrylat, n- und Isopropyl(meth)acrylat, n- und Iso-Butyl(meth)acrylat, tert.-Butyl(meth)acrylat, 2-Ethylhexyl(meth)acrylat, Cyclohexyl(meth)acrylat und Isobornyl(meth)acrylat, vorzugsweise in einer Menge von 0,1 bis 30 Gew.-%, besonders bevorzugt von 1 bis 20 Gew.-%, ganz besonders bevorzugt von 2 bis 10 Gew.-%, jeweils bezogen auf das Gesamtgewicht der Haftvermittlerschichten (d) bzw. (e), wobei sich die Polymer-Komponenten immer auf 100 Gew.-% addieren.

Vorzugsweise liegt als weitere Polymer-Komponente der Haftvermittlerschichten (d) und/oder (e) wenigstens ein Copolymer ausgewählt aus der Gruppe umfassend Ethylen-Vinylacetat-Copolymere und Ethylen-C₁₋₄-Alkyl(meth)acrylat-Copolymere, vorzugsweise ein Ethylen-Vinylacetat-Copolymer und/oder ein Ethylen-Butylacrylat-Copolymer, vor.

Die Haftvermittlerschichten (d) und (e) der erfindungsgemäßen Mehrschichtfolie weisen jeweils unabhängig voneinander vorzugsweise eine Schichtdicke von 1 µm bis 30 µm, besonders bevorzugt von 2 µm bis 25 µm, ganz besonders bevorzugt von 3 µm bis 20 µm, insbesondere von 4 µm bis 15 µm auf.

In einer bevorzugten Ausführungsform der erfindungsgemäßen Mehrschichtfolie weisen die Haftvermittlerschichten (d) und (e) einen identischen Schichtaufbau, vorzugsweise eine identische Schichtdicke und identische Polymer-Komponenten, auf.

In einer bevorzugten Ausführungsform ist die erfindungsgemäße Mehrschichtfolie in Bezug auf eine zentrale Schicht (b) symmetrisch angeordnet.

Die Schicht (a), die Schichten (b), (c) sowie die Haftvermittlerschichten (d) und (e) können, wenn notwendig, jeweils unabhängig voneinander mit Additiven ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, und Dispergiermittel, dotiert sein.

Die Schicht (a), die Schichten (b), (c) sowie die Haftvermittlerschichten (d) und (e) können jeweils unabhängig voneinander wenigstens 0,01-30 Gew.-%, vorzugsweise wenigstens 0,1-20 Gew.-%, jeweils bezogen auf das Gesamtgewicht einer einzelnen Schicht, wenigstens eines der vorstehend genannten Additive enthalten. Dazu können die Additive in Form von master batches in Polyolefinen, wie Polyethylen, oder Polyamiden in die jeweilige Schicht eingearbeitet werden.

Die erfindungsgemäße Mehrschichtfolie weist vorzugsweise eine Gesamtschichtdicke von 10 µm bis 300 µm, besonders bevorzugt von 15 µm bis 250 µm, ganz besonders bevorzugt von 20 µm bis 200 µm, insbesondere von 30 µm bis 180 µm, insbesondere bevorzugt von 50 µm bis 150 µm auf.

Vorzugsweise weist die erfindungsgemäße Mehrschichtfolie eine Durchstoßfestigkeit von wenigstens 250 N gemäß ASTM E 154-10, eine Reißkraft von wenigstens 150 N gemäß ASTM 1970 und/oder eine Weiterreißfestigkeit von wenigstens 1500 mN gemäß dem Elmendorf-Verfahren (ISO 6383-2) auf.

In einer bevorzugten Ausführungsform weist die erfindungsgemäße Mehrschichtfolie wenigstens eine vorzugsweise permanent klebefähige Klebstoffschicht (f), besonders bevorzugt eine druckempfindliche Klebstoffschicht, und/oder wenigstens eine Schicht (h) basierend auf einer Abdichtungsmasse, vorzugsweise auf einer selbstklebenden Abdichtungsmasse, besonders bevorzugt auf einer selbstklebenden Bitumen-Abdichtungsmasse oder einer selbstklebenden Abdichtungsmasse basierend auf Kautschuk, vorzugsweise Butylkautschuk, insbesondere auf einer kaltselbstklebenden oder heißselbstklebenden, insbesondere bevorzugt auf einer kaltselbstklebenden Bitumen-Abdichtungsmasse, ggf. jeweils auf einer ihrer Oberflächenschichten, auf. Weist die erfindungsgemäße Mehrschichtfolie wenigstens eine Schicht (h) und/oder wenigstens eine Klebstoffschicht (f) auf, so kann diese jeweils gegebenenfalls auf ihrer Oberfläche eine entfernbare Schutzfolie oder eine entfernbare Schutzschicht (g), vorzugsweise basierend auf silikonisierten Papier, aufweisen.

Ein weiterer Gegenstand der vorliegenden Erfindung ist ein Verfahren zur Herstellung der erfindungsgemäßen Mehrschichtfolie.

In einer bevorzugten Ausführungsform können die Schichten (a), (b), (c), (d) und (e) der erfindungsgemäßen Mehrschichtfolie als gesamte mehrschichtige Folie in Form einer Schlauchfolie produziert und verarbeitet werden.

In einer anderen bevorzugten Ausführungsform können Schichten (a), (b), (c), (d) und (e) der erfindungsgemäßen Mehrschichtfolie insgesamt als eine Cast-Folie produziert und verarbeitet werden.

Dementsprechend kann die Herstellung der einzelnen Schichten (a), (b), (c), (d) und (e) der erfindungsgemäßen Mehrschichtfolie durch Co-Extrusion erfolgen.

Die erfindungsgemäße Mehrschichtfolie aus den Schichten (a), (b), (c), (d) und (e) ist vorzugsweise durch (Co)-Extrusion, besonders bevorzugt durch Blasfolien-(Co)-Extrusion oder durch Cast-(Co)-Extrusion erhältlich.

Weist die erfindungsgemäße Mehrschichtfolie eine vorzugsweise permanent klebefähige Klebstoffschicht (f), vorzugsweise eine druckempfindliche Klebstoffschicht (f), auf einer ihrer Oberflächenschichten auf, so kann diese Klebstoffschicht (f) durch Beschichtung oder Kaschierung einer der Oberflächen des Schichtverbundes der Schichten (a), (b), (c), (d) und (e) der erfindungsgemäßen Mehrschichtfolie mit der Klebstoffschicht (f) hergestellt werden. Zum Schutz der Klebstoffschicht (f) kann diese gegebenenfalls in einem nachfolgenden Arbeitsschritt auf ihrer Oberfläche mit einer entfernbaren Schutzfolie oder einer entfernbaren Schutzschicht (g) als Abdeckung versehen werden.

Weist die erfindungsgemäße Mehrschichtfolie eine Schicht (h) basierend auf einer Abdichtungsmasse auf einer ihrer nicht permanent klebefähigen Oberflächenschichten auf, so kann diese Schicht (h) durch Beschichtung oder Kaschierung unter Verwendung üblicher Kaschierklebstoffe mit einer der Oberflächen des Schichtverbundes der Schichten (a), (b), (c), (d), (e) und ggf. (f) der erfindungsgemäßen Mehrschichtfolie verbunden werden. Basiert die Schicht (h) auf einer selbstklebenden Abdichtungsmasse, so kann die erfindungsgemäße Mehrschichtfolie durch einfache Beschichtung mit der Schicht (h), ggf. unter Kühlung oder Erhitzen der Abdichtungsmasse, verbunden werden. Zum Schutz der Schicht (h) kann diese gegebenenfalls in einem nachfolgenden Arbeitsschritt auf ihrer Oberfläche mit einer entfernbaren Schutzfolie oder einer entfernbaren Schutzschicht (g) als Abdeckung versehen werden.

Die jeweiligen Herstellungsverfahren und entsprechende Produktionsparameter sind dem Fachmann allgemein bekannt.

Die erfindungsgemäße Mehrschichtfolie kann vorzugsweise bedruckt und/oder farbig sein.

Die erfindungsgemäße Mehrschichtfolie mit Klebstoffschicht wird vorzugsweise als Klebeband eingesetzt.

Ein weiterer Gegenstand der vorliegenden Erfindung ist daher die Verwendung der erfindungsgemäßen Mehrschichtfolie zur Herstellung eines Klebebands und die Verwendung der erfindungsgemäßen Mehrschichtfolie in Form eines Klebebandes.

Ein weiterer Gegenstand der vorliegenden Erfindung ist ein Klebeband umfassend eine erfindungsgemäße Mehrschichtfolie.

Die erfindungsgemäße Mehrschichtfolie mit Abdichtungsmasse wird vorzugsweise auch als Abdichtungsbahn eingesetzt.

Ein weiterer Gegenstand der vorliegenden Erfindung ist daher die Verwendung der erfindungsgemäßen Mehrschichtfolie zur Herstellung einer Abdichtungsbahn, vorzugsweise einer Bitumen-Abdichtungsbahn und die Verwendung der erfindungsgemäßen Mehrschichtfolie in Form einer Abdichtungsbahn, vorzugsweise Bitumen-Abdichtungsbahn, zur Dachabdeckung, zur Rohrverkleidung, zur Außenverkleidung, zur Abdeckung von Gebäudeteilen oder Gebäuden.

Ein weiterer Gegenstand der vorliegenden Erfindung ist eine Abdichtungsbahn, vorzugsweise eine Bitumen-Abdichtungsbahn, vorzugsweise gegen Wasser und/oder Witterungseinflüsse umfassend eine erfindungsgemäße Mehrschichtfolie.

Ein weiterer Gegenstand der vorliegenden Erfindung ist eine eine erfindungsgemäße Mehrschichtfolie umfassende Abdichtungsbahn, vorzugsweise eine Bitumen-Abdichtungsbahn, als Dachabdeckung, als Außenverkleidung, als Abdeckung von Gebäudeteilen oder Gebäuden oder als Rohrverkleidung, vorzugsweise als Abdichtungsmanschette.

### Bestimmung der Barrierewirkung gegen Öl

Mittels der nachfolgend beschriebenen gravimetrischen Testmethode zur Bestimmung der Barrierewirkung einer Mehrschichtfolie gegen Öl kann festgestellt werden, ob eine Mehrschichtfolie auch bei längerer Lagerung die Migration von Öl aus einer ölhaltigen Masse wie z.B. aus Bitumen unterbindet, d.h. die im Bitumen enthaltenen Öle nicht aufnimmt, sondern eine Barrierewirkung gegen die darin enthaltenen Öle aufweist.

Auf eine erste, untere Deckelungsfolie (OPET-Folie, glatt, DIN A4) mit sehr guter Barrierewirkung gegen Öle wird eine mit einem Silikon-Releaseliner abgedeckte Bitumen-Masse aufgebracht (19 cm x 19 cm). Eine Probe der erfindungsgemäßen Mehrschichtfolie (DIN A4) (oder einer Vergleichsfolie) wird nach Entfernen des Silikon-Releaseliners von der Bitumen-Masse auf dieselbe mittig blasenfrei aufgebracht, so dass die gesamte Bitumen-Fläche abgedeckt ist. Mittels eines Tapetenrollers wird die Probe der erfindungsgemäßen Mehrschichtfolie auf die Bitumen-Fläche angedrückt. Auf die auf die Bitumen-Fläche aufgebrachte Mehrschichtfolie wird anschließend ein Saugliner, d.h. eine Folie ohne Barrierewirkung gegen Öle (LDPE-Folie, glatt, DIN A4), und auf diesen Saugliner wiederum eine zweite, obere Deckelungsfolie (OPET-Folie, glatt, DIN A4) aufgebracht. Auf diese zweite Deckelungsfolie werden vier Gewichte zu je 2,6 kg gestellt und das gesamte Testpaket so im Ofen bei 40°C über den Zeitraum von einer Woche gelagert.

Die Barrierewirkung gegen Öl wird mittels einer quantitativen Bestimmung der Ölaufnahme in die Probe der erfindungsgemäßen Mehrschichtfolie bzw. in den Saugliner bestimmt. Dazu werden sowohl die Probe als auch der Saugliner vor Testbeginn mit der Analysenwaage ausgewogen. Das Testpaket wird jeweils nach 3, 5 und 7 Tagen aus dem Ofen genommen und die einzelnen Lagen voneinander getrennt und sowohl die Probe als auch der Saugliner auf der Analysenwaage ausgewogen. Zu beachten ist, dass keine Bitumen-Reste an der Probe haften bleiben dürfen, um Fehlinterpretationen zu vermeiden. Nach der Auswaage werden die einzelnen Lagen wieder in ihre ursprüngliche Position zurückgebracht. Ausgehend von den Startgewichten kann so die Gewichtszunahme in % berechnet werden. Über die Gewichtsänderungen kann so auf den Grad der Ölaufnahme und damit auf die Barriere-Eigenschaften gegen Öle geschlossen werden.

### Bestimmung der Weiterreißfestigkeit

Die Weiterreißfestigkeit wird nach ISO 6383-2 bestimmt und als Weiterreißkraft gemessen und in [N] angegeben.

### Bestimmung der Durchstoßfestigkeit nach ASTM E 154-10

Die Durchstoßfestigkeit wird nach ASTM E 154-10 bestimmt und in [N] angegeben.

### Bestimmung der Reißkraft nach ASTM 1970

Die Reißkraft wird nach ASTM 1970 bestimmt und in [N] angegeben.

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

| | |
|---|---|
| Propylen-Copolymer: | Propylen-Ethylen-Copolymer (Ethylen-Anteil: 7-9%) der Firma Dow Chemicals |
| Propylen-Homopolymer: | Propylen-Homopolymer der Firma Borealis |
| Batch 1: | Farb-Batch der Firma Schulman enthaltend ca. 50 Gew.-% Polyethylen als PolymerKomponente |
| MSA-modifiziertes Polypropylen: | mit Maleinsäureanhydrid-Gruppen modifiziertes Polypropylen der Firma Mitsui |
| IPDI-Copolyamid: | Copolyamid, gebildet aus ε-Caprolactam, Isophorondiamin und Isoterephthalsäure, mit einem Isophorondiaminanteil von ca. 5%, der Fima Lanxess |
| Copolyamid: | Copolyamid, gebildet aus ε-Caprolactam, Hexamethylendiamin und Adipinsäure, der Firma BASF |
| PA 6: | Homopolyamid, gebildet aus ε-Caprolactam, der Firma Lanxess |

### II. Herstellung der Mehrschichtfolien

Die Mehrschichtfolien der Vergleichsbeispiele **V1a**, **V1b** sowie des Beispiels 1 **(B1)** bestehen jeweils aus fünf Schichten und weisen eine Gesamtschichtdicke von jeweils 125 µm auf. Die Schichtdicke der Schichten (a) und (c) beträgt jeweils 42 µm, die Schichtdicken der Haftvermittlerschichten (d) und (e) jeweils 8 µm und die Schichtdicke der Schicht (b) jeweils 25 µm. Die einzelnen Schichten der Mehrschichtfolien grenzen jeweils in der Reihenfolge unmittelbar aneinander an, in der sie nachstehend aufgeführt sind. Die einzelnen Schichten (a), (b), (c), (d) und (e) der Mehrschichtfolien der Vergleichsbeispiele **V1a, V1b** sowie des Beispiels 1 **(B1)** wurden jeweils durch Blasfolien-Co-Extrusion hergestellt.

### III. Beispiel und Vergleichsbeispiele

Alle nachfolgenden %-Angaben sind jeweils Gew.-%.

### Beispiel 1 - Mehrschichtfolien B1, V1a und V1b

**Tabelle 1**

| *Schichtaufbau* ***B1*, *V1a*, *V1b,*** | *Rohstoffe **B1*** | *Rohstoffe **V1a*** | *Rohstoffe **V1b*** |
|---|---|---|---|
| Schicht (a) | Propylen-Copolymer (40%), Batch 1 (40%), Propylen-Homopolymer (20%) | Propylen-Copolymer (60%), Batch 1 (40%) **(enthaltend kein Propylen-Homopolymer)** | Propylen-Copolymer (40%), Batch 1 (40%), Propylen-Homopolymer (20%) |
| Haftvermittlerschicht (d) | MSA-modifiziertes Polypropylen (75%), Propylen-Homopolymer (25%) | MSA-modifiziertes Polypropylen (75%), Propylen-Homopolymer (25%) | MSA-modifiziertes Polypropylen (75%), Propylen-Homopolymer (25%) |
| Schicht (b) | IPDI-Copolyamid (50%), Copolyamid (50%) | IPDI-Copolyamid (50%), Copolyamid (50%) | PA 6 (100%) **(enthaltend kein Isophorondiamin)** |
| Haftvermittlerschicht (e) | MSA-modifiziertes Polypropylen (75%), Propylen-Homopolymer (25%) | MSA-modifiziertes Polypropylen (75%), Propylen-Homopolymer (25%) | MSA-modifiziertes Polypropylen (75%), Propylen-Homopolymer (25%) |
| Schicht (c) | Propylen-Copolymer (40%), Batch 1 (40%), Propylen-Homopolymer (20%) | Propylen-Copolymer (60%), Batch 1 (40%) **(enthaltend kein Propylen-Homopolymer)** | Propylen-Copolymer (40%), Batch 1 (40%), Propylen-Homopolymer (20%) |

Für die Mehrschichtfolien des Beispiels 1 **(B1)** sowie des Vergleichsbeispiels 1 a **(V1a)** wurde jeweils nach der vorstehend beschriebenen Methode die Durchstoßfestigkeit sowie die Reißkraft bestimmt.
Für die Mehrschichtfolien des Beispiels 1 **(B1)** sowie des Vergleichsbeispiels 1 b (V1 b) wurde ferner jeweils nach der vorstehend beschriebenen Methode die Weiterreißfestigkeit bestimmt.

**Tabelle 2**

| Bespiel/ Vergleichsbeispiel | Durchstoßfestigkeit [N] | Reißkraft [N] | Weiterreißfestigkeit [mN] |
|---|---|---|---|
| **V1a** | ca. 230 | ca. 130 | - |
| **V1b** | - | - | ca. 1000 |
| **B1** | ca. 280 | ca. 160 | ca. 2000 |

Die erfindungsgemäße Mehrschichtfolie des Beispiels **B1** weist zudem eine nach der vorstehend beschriebenen Methode bestimmte sehr gute Barrierewirkung gegen Öl auf.

## Patentansprüche

1. Eine Mehrschichtfolie umfassend
(a) eine Schicht basierend auf wenigstens einem Propylen-Copolymer in einer Menge von wenigstens 30 Gew.-%, bezogen auf das Gesamtgewicht der Schicht (a), wenigstens einem Propylen-Homopolymer in einer Menge von wenigstens 20 Gew.-%, bezogen auf das Gesamtgewicht der Schicht (a), ggf. einem weiteren Polyolefin und ggf. bis zu 30 Gew.-% Additive, bezogen auf das Gesamtgewicht der Schicht (a), wobei sich die Komponenten immer auf 100 Gew.-% addieren,
(b) wenigstens eine innenliegende Schicht basierend auf wenigstens einem Homo- und/oder Copolyamid mit Isophorondiamin-Einheiten als Polyamid-Komponente,
(c) eine Schicht basierend auf wenigstens einem Propylen-Copolymer in einer Menge von wenigstens 30 Gew.-%, bezogen auf das Gesamtgewicht der Schicht (c), wenigstens einem Propylen-Homopolymer in einer Menge von wenigstens 20 Gew.-%, bezogen auf das Gesamtgewicht der Schicht (c), ggf. einem weiteren Polyolefin und ggf. bis zu 30 Gew.-% Additive, bezogen auf das Gesamtgewicht der Schicht (c), wobei sich die Komponenten immer auf 100 Gew.-% addieren, und
(d) bzw. (e) jeweils eine zwischen der Schicht (a) und der Schicht (b) bzw. der Schicht (b) und der Schicht (c) angeordnete Haftvermittlerschicht (d) bzw. (e) jeweils basierend auf wenigstens einem modifizierten thermoplastischen Olefin-Homo-oder Copolymeren.

2. Eine Mehrschichtfolie nach Anspruch 1, **dadurch gekennzeichnet, dass** die Schicht (b) auf wenigstens einem Homo- und/oder Copolyamid mit Isophorondiamin-Einheiten, vorzugsweise auf wenigstens einem Copolyamid mit Isophorondiamin-Einheiten, in einer Menge von wenigstens 30 Gew.-%, bezogen auf das Gesamtgewicht der Schicht (b), basiert.

3. Eine Mehrschichtfolie nach Anspruch 1 oder 2, **dadurch gekennzeichnet, dass** der Anteil an Isophorondiamin-Einheiten in der Polyamid-Komponente wenigstens 1 Gew.-%, vorzugsweise wenigstens 3 Gew.-%, bezogen auf das Gesamtgewicht dieser Polyamid-Komponente, beträgt.

4. Eine Mehrschichtfolie nach einem der Ansprüche 1 bis 3, **dadurch gekennzeichnet, dass** die Isophorondiamin-Einheiten umfassende Polyamid-Komponente der Schicht (b) aliphatische oder aromatische Dicarbonsäure-Einheiten, vorzugsweise aromatische Dicarbonsäure-Einheiten, umfasst.

5. Eine Mehrschichtfolie nach einem der Ansprüche 1 bis 4, **dadurch gekennzeichnet, dass** die Schicht (b) als weitere Polyamid-Komponente wenigstens ein keine Isophorondiamin-Einheiten umfassendes, aliphatisches Homo- und/oder Copolyamid aufweist.

6. Eine Mehrschichtfolie nach einem der Ansprüche 1 bis 5, **dadurch gekennzeichnet, dass** die Schicht (a) und die Schicht (c) jeweils unabhängig voneinander wenigstens ein Propylen-Copolymer in einer Menge von wenigstens 35 Gew.-% entält, jeweils bezogen auf das Gesamtgewicht der Schicht (a) bzw. der Schicht (c).

7. Eine Mehrschichtfolie nach einem der Ansprüche 1 bis 6, **dadurch gekennzeichnet, dass** die Schicht (a) und die Schicht (c) einen identischen Schichtaufbau, vorzugsweise eine identische Schichtdicke und identische Polymer-Komponenten, aufweisen.

8. Eine Mehrschichtfolie nach einem der Ansprüche 1 bis 7, **dadurch gekennzeichnet, dass** die Schicht (b) als eine Barriereschicht, vorzugsweise als eine Ölbarriereschicht, dient.

9. Eine Mehrschichtfolie nach einem der Ansprüche 1-8, **dadurch gekennzeichnet, dass** sie in Bezug auf eine zentrale Schicht (b) symmetrisch angeordnet ist.

10. Eine Mehrschichtfolie nach einem der Ansprüche 1-9, **dadurch gekennzeichnet, dass** die Schicht (a) bzw. die Schicht (c) jeweils eine Oberflächenschicht und die Schicht (b) eine zentrale Schicht ist.

11. Eine Mehrschichtfolie nach einem der Ansprüche 1-10, **dadurch gekennzeichnet, dass** sie eine Durchstoßfestigkeit von wenigstens 250 N gemäß ASTM E 154-10, eine Reißkraft von wenigstens 150 N gemäß ASTM 1970 und/oder eine Weiterreißfestigkeit von wenigstens 1500 mN gemäß dem Elmendorf-Verfahren (ISO 6383-2) aufweist.

12. Eine Mehrschichtfolie nach einem der Ansprüche 1-11, **dadurch gekennzeichnet, dass** sie wenigstens eine vorzugsweise permanent klebefähige Klebstoffschicht (f) und/oder wenigstens eine Schicht (h) basierend auf einer Abdichtungsmasse, vorzugsweise auf einer selbstklebenden Abdichtungsmasse, aufweist.

13. Ein Klebeband umfassend eine Mehrschichtfolie nach einem der Ansprüche 1-12.

14. Eine Abdichtungsbahn, vorzugsweise eine Bitumen-Abdichtungsbahn, gegen Wasser und/oder Witterungseinflüsse umfassend eine Mehrschichtfolie nach einem der Ansprüche 1-12.

15. Eine Abdichtungsbahn, vorzugsweise eine Bitumen-Abdichtungsbahn, umfassend eine Mehrschichtfolie nach einem der Ansprüche 1-12 als Dachabdeckung, als Außenverkleidung, als Abdeckung von Gebäudeteilen oder Gebäuden oder als Rohrverkleidung.

## Claims

1. A multilayer film comprising
(a) a layer based on an amount of at least 30% by weight, based on the total weight of the layer (a), of at least one propylene copolymer, on an amount of at least 20% by weight, based on the total weight of the layer (a), of at least one propylene homopolymer, and optionally on a further polyolefin and optionally up to 30% by weight of additives, based on the total weight of the layer (a), whereby the components always give a total of 100% by weight,
(b) at least one internal layer based on at least one homo- and/or copolyamide having isophoronediamine units as polyamide component,
(c) a layer based on an amount of at least 30% by weight, based on the total weight of the layer (c), of at least one propylene copolymer, on an amount of at least 20% by weight, based on the total weight of the layer (c), of at least one propylene homopolymer, and optionally on a further polyolefin and optionally up to 30% by weight of additives, based on the total weight of the layer (c), where the components always give a total of 100% by weight, and
(d) respectively (e) as adhesion-promoter layers (d) respectively (e) in each case arranged between the layer (a) and the layer (b) respectively between the layer (b) and the layer (c) in each case based on at least one modified thermoplastic olefin homo- or copolymer.

2. The multilayer film as claimed in claim 1, **characterized in that** the layer (b) is based on at least one homo- and/or copolyamide with isophoronediamine units, preferably on at least one copolyamide with isophoronediamine units, in an amount of at least 30% by weight, based on the total weight of the layer (b).

3. The multilayer film as claimed in claim 1 or 2, **characterized in that** the proportion of isophoronediamine units in the polyamide component is at least 1% by weight, preferably at least 3% by weight, based on the total weight of said polyamide component.

4. The multilayer film as claimed in any one of claims 1 to 3, **characterized in that** the polyamide component of the layer (b), comprising isophoronediamine units, comprises aliphatic or aromatic dicarboxylic acid units, preferably aromatic dicarboxylic acid units.

5. The multilayer film as claimed in any one of claims 1 to 4, **characterized in that** the layer (b) comprises, as further polyamide component, at least one aliphatic homo- and/or copolyamide comprising no isophoronediamine units.

6. The multilayer film as claimed in any one of claims 1 to 5, **characterized in that** the layer (a) and the layer (c) respectively mutually independently, comprise at least one propylene copolymer in an amount of at least 35% by weight, based in each case on the total weight of the layer (a) respectively of the layer (c),

7. The multilayer film as claimed in any one of claims 1 to 6, **characterized in that** the layer (a) and the layer (c) have an identical layer structure, preferably an identical layer thickness and identical polymer components.

8. The multilayer film as claimed in any one of claims 1 to 7, **characterized in that** the layer (b) serves as a barrier layer, preferably as an oil-barrier layer.

9. The multilayer film as claimed in any one of claims 1 to 8, **characterized in that** its arrangement is symmetrical in relation to a central layer (b).

10. The multilayer film as claimed in any one of claims 1 to 9, **characterized in that** the layer (a) respectively the layer (c) is a surface layer and the layer (b) is a central layer.

11. The multilayer film as claimed in any one of claims 1 to 10, **characterized in that** its puncture resistance is at least 250 N according to ASTM E154-10, its tensile strength is at least 150 N according to ASTM D1970, and/or its tear-propagation resistance is at least 1500 mN according to the Elmendorf method (ISO 6383-2).

12. The multilayer film as claimed in any one of claims 1 to 11, **characterized in that** it has at least one preferably permanently adhesive layer (f) of adhesive, and/or has at least one layer (h) based on a sealing composition, preferably based on a self-adhesive sealing composition.

13. An adhesive tape comprising a multilayer film as claimed in any one of claims 1 to 12.

14. A sealing sheet, preferably a bitumen-based sealing sheet, comprising a multilayer film as claimed in any one of claims 1 to 12, effective against water and/or effective against weathering influences.

15. A sealing sheet, preferably a bitumen-based sealing sheet, comprising a multilayer film as claimed in any one of claims 1 to 12 as covering for roofs, as external covering, as protective covering for buildings or for parts of buildings, or as pipe casing.

## Revendications

1. Film multicouche comprenant :
(a) une couche à base d'au moins un copolymère de propylène en une quantité d'au moins 30 % en poids, par rapport au poids total de la couche (a), d'au moins un homopolymère de propylène en une quantité d'au moins 20 % en poids, par rapport au poids total de la couche (a), éventuellement d'une polyoléfine supplémentaire et éventuellement de jusqu'à 30 % en poids d'additifs, par rapport au poids total de la couche (a), la somme des composants étant toujours de 100 % en poids,
(b) au moins une couche intérieure à base d'au moins un homo- et/ou copolyamide contenant des unités isophorone-diamine en tant que composant polyamide,
(c) une couche à base d'au moins un copolymère de propylène en une quantité d'au moins 30 % en poids, par rapport au poids total de la couche (c), d'au moins un homopolymère de propylène en une quantité d'au moins 20 % en poids, par rapport au poids total de la couche (c), éventuellement d'une polyoléfine supplémentaire et éventuellement de jusqu'à 30 % en poids d'additifs, par rapport au poids total de la couche (c), la somme des composants étant toujours de 100 % en poids, et
(d) et (e) une couche de promoteur d'adhésion (d) et (e) agencée respectivement entre la couche (a) et la couche (b) et entre la couche (b) et la couche (c), à chaque fois à base d'au moins un homo- ou copolymère d'oléfine thermoplastique modifié.

2. Film multicouche selon la revendication 1, **caractérisé en ce que** la couche (b) est à base d'au moins un homo- et/ou copolyamide contenant des unités isophorone-diamine, de préférence à base d'au moins un copolyamide contenant des unités isophorone-diamine, en une quantité d'au moins 30 % en poids, par rapport au poids total de la couche (b).

3. Film multicouche selon la revendication 1 ou 2, **caractérisé en ce que** la proportion d'unités isophorone-diamine dans le composant polyamide est d'au moins 1 % en poids, de préférence d'au moins 3 % en poids, par rapport au poids total de ce composant polyamide.

4. Film multicouche selon l'une quelconque des revendications 1 à 3, **caractérisé en ce que** le composant polyamide comprenant des unités isophoronediamine de la couche (b) comprend des unités acide dicarboxylique aliphatique ou aromatique, de préférence des unités acide dicarboxylique aromatique.

5. Film multicouche selon l'une quelconque des revendications 1 à 4, **caractérisé en ce que** la couche (b) comprend en tant que composant polyamide supplémentaire au moins un homo- et/ou copolyamide aliphatique ne comprenant pas d'unité isophoronediamine.

6. Film multicouche selon l'une quelconque des revendications 1 à 5, **caractérisé en ce que** la couche (a) et la couche (c) contiennent chacune indépendamment l'une de l'autre au moins un copolymère de propylène en une quantité d'au moins 35 % en poids, à chaque fois par rapport au poids total de la couche (a) ou de la couche (c).

7. Film multicouche selon l'une quelconque des revendications 1 à 6, **caractérisé en ce que** la couche (a) et la couche (c) présentent une structure de couche identique, de préférence une épaisseur de couche identique et des composants polymères identiques.

8. Film multicouche selon l'une quelconque des revendications 1 à 7, **caractérisé en ce que** la couche (b) sert de couche barrière, de préférence de couche barrière contre les huiles.

9. Film multicouche selon l'une quelconque des revendications 1 à 8, **caractérisé en ce qu'**il est agencé symétriquement au regard d'une couche centrale (b).

10. Film multicouche selon l'une quelconque des revendications 1 à 9, **caractérisé en ce que** la couche (a) et la couche (c) sont chacune une couche de surface et la couche (b) est une couche centrale.

11. Film multicouche selon l'une quelconque des revendications 1 à 10, **caractérisé en ce qu'**il présente une résistance à la perforation d'au moins 250 N selon ASTM E 154-10, une force de déchirure d'au moins 150 N selon ASTM 1970 et/ou une résistance à la propagation d'une déchirure d'au moins 1 500 mN selon le procédé Elmendorf (ISO 6383-2).

12. Film multicouche selon l'une quelconque des revendications 1 à 11, **caractérisé en ce qu'**il comprend au moins une couche adhésive (f) de préférence à adhésivité permanente et/ou au moins une couche (h) à base d'un matériau d'étanchéité, de préférence à base d'un matériau d'étanchéité autoadhésif.

13. Bande adhésive comprenant un film multicouche selon l'une quelconque des revendications 1 à 12.

14. Bande d'étanchéité, de préférence bande d'étanchéité pour bitume, contre l'eau et/ou les intempéries, comprenant un film multicouche selon l'une quelconque des revendications 1 à 12.

15. Bande d'étanchéité, de préférence bande d'étanchéité pour bitume, comprenant un film multicouche selon l'une quelconque des revendications 1 à 12, en tant que couverture de toits, en tant que revêtement extérieur, en tant que couverture de parties de bâtiments ou de bâtiments ou en tant que revêtement de tubes.
